Europäisches Patentamt

European Patent Office

Office européen des brevets

(19)

(11) Numéro de publication : **0 334 693 B1**

(12)                    **FASCICULE DE BREVET EUROPEEN**

(45) Date de publication du fascicule du brevet :
24.07.91 Bulletin 91/30

(51) Int. Cl.⁵ : **G01P 3/481, G01P 3/495**

(21) Numéro de dépôt : **89400467.0**

(22) Date de dépôt : **20.02.89**

(54) **Dispositif tachymétrique perfectionné.**

(30) Priorité : **22.02.88 FR 8802077**

(43) Date de publication de la demande :
**27.09.89 Bulletin 89/39**

(45) Mention de la délivrance du brevet :
**24.07.91 Bulletin 91/30**

(84) Etats contractants désignés :
**DE ES GB IT**

(56) Documents cités :
**DE-A- 3 417 279**
**FR-A- 2 296 176**
**FR-A- 2 530 030**
**PATENT ABSTRACTS OF JAPAN, vol. 7, no.
206 (P-222)[1351], 10 septembre 1983; & JP-
A-58 100 752 (HONDA GIKEN KOGYO K.K.)
15-06-1983**

(73) Titulaire : **JAEGER**
**2, rue Baudin**
**F-92303 Levallois-Perret (FR)**

(72) Inventeur : **Eisenberger, Benjamin**
**13, Avenue Engrand**
**F-78600 Maisons-Laffitte (FR)**
Inventeur : **Roussel, Pierre**
**44, Rue Perronet**
**F-92200 Neuilly-sur-Seine (FR)**

(74) Mandataire : **Martin, Jean-Jacques et al**
**Cabinet REGIMBEAU 26, Avenue Kléber**
**F-75116 Paris (FR)**

EP 0 334 693 B1

## Description

La présente invention concerne le domaine des dispositifs tachymétriques.

La présente invention concerne plus précisément les dispositifs tachymétriques du type connu en soi comprenant un capteur générant un signal électrique de fréquence proportionnelle à une vitesse à détecter, un organe moteur d'exploitation et des moyens de liaison électrique reliant le capteur à l'organe moteur d'exploitation.

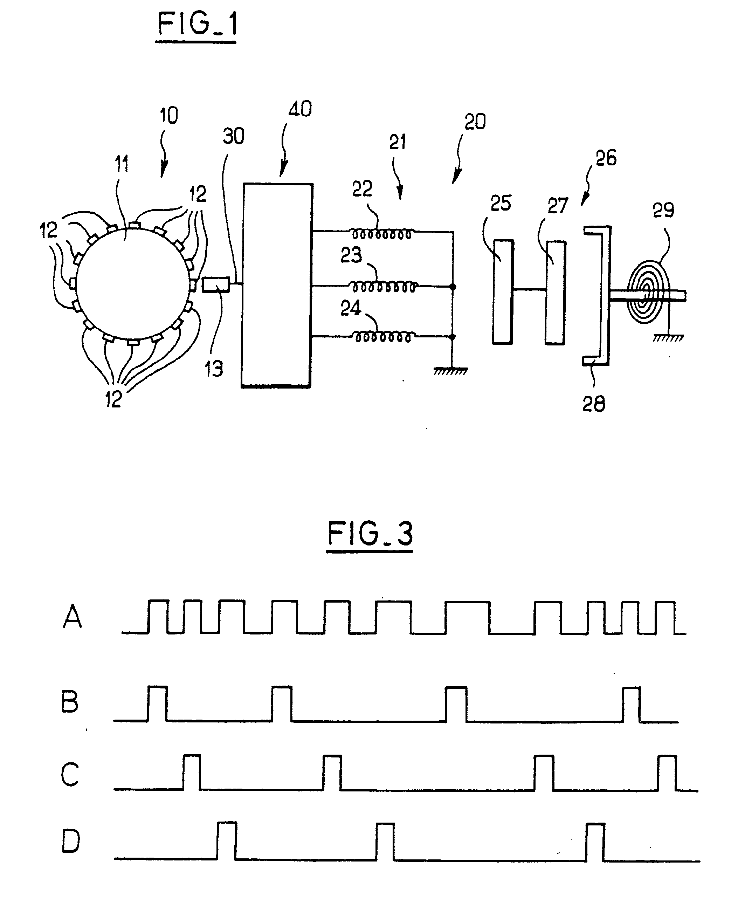

Un dispositif tachymétrique classique de ce type est illustré schématiquement sur la figure 1 annexée.

Comme représenté sur cette figure 1, le capteur 10 peut comprendre une roue phonique 11 comprenant des dents 12 équiréparties sur sa périphérie, associée à un transducteur 13, tel qu'un transducteur à effet Hall, apte à détecter le passage des dents 12 et à générer des impulsions électriques au rythme de ces détections.

L'organe moteur d'exploitation 20 peut comprendre, comme illustré sur la figure 1, un élément moteur pas à pas polyphasé 21, et un système de mesure à courants de Foucault 26. L'élément moteur 21 comprend des bobinages de stator 22, 23, 24 et un rotor formé d'un aimant principal 25. Le système de mesure 26 comprend un aimant auxiliaire 27 couplé avec l'aimant principal 25 pour tourner avec celui-ci, et une cloche 28.

La cloche 28 est réalisée en matériau électriquement conducteur. Elle coiffe l'aimant auxiliaire 27 et est guidée à pivotement coaxialement à celui-ci. L'aimant principal 25 est entraîné à rotation par le champ tournant généré par les bobinages 22, 23, 24. L'aimant auxiliaire 27 entraîne la cloche grâce aux courants de Foucault générés dans celle-ci. Un ressort spiral 29 fixé sur l'arbre de la cloche 28 limite la rotation de celle-ci.

L'angle de pivotement de la cloche 28 par rapport à une position neutre de repos est lié directement à la fréquence des impulsions issues du capteur 10. La position d'équilibre de la cloche 28 est en effet déterminée par l'égalité du couple moteur appliqué à la cloche 28 par l'aimant auxiliaire 27, et le couple résistant appliqué à la cloche 28 par le ressort 29. L'arbre de la cloche 28 peut être équipé d'une aiguille indicatrice dont la position représente directement la vitesse à détecter de la roue phonique 11.

Les moyens de liaison électrique reliant le capteur 10 à l'organe moteur d'exploitation 20 sont référencés 30 sur la figure 1.

Un diviseur de fréquence 40 est de préférence intercalé entre le capteur 10 et l'organe moteur d'exploitation 20 pour appliquer les impulsions générées par le capteur 10, successivement aux différents bobinages 22, 23, 24.

La Demanderesse a constaté que les dispositifs tachymétriques du type précité, bien qu'ayant rendu de grands services présentent l'inconvénient majeur suivant. Compte tenu de l'inertie de l'organe moteur exploitation, ce dernier reste immobile et ne redémarre pas en cas d'accélérations trop fortes de la roue phonique 11 ou de pannes intermittentes du transducteur 13, alors que la roue phonique continue à tourner rapidement.

Par ailleurs, le maintien de l'alimentation d'un bobinage de l'élément moteur 21, en cas de panne ou d'arrêt de la roue phonique conduit à un échauffement inacceptable du dispositif.

La présente invention a pour but d'éliminer ces inconvénients.

Elle propose à cet effet un dispositif tachymétrique du type connu en soi comprenant un capteur générant un signal électrique de fréquence proportionnelle à une vitesse à détecter, un organe moteur d'exploitation et des moyens de liaison électrique reliant le capteur à l'organe moteur d'exploitation, caractérisé par le fait qu'un dispositif limitant les variations de fréquence des impulsions appliquées à l'organe moteur d'exploitation, est intercalé entre ce dernier et le capteur.

De préférence, selon la présente invention, l'organe limiteur de variation de fréquence comprend un étage intégrateur précédé d'un étage convertisseur fréquence/tension et suivi d'un étage convertisseur tension/fréquence.

Selon une autre caractéristique avantageuse de la présente invention, les impulsions de commande appliquées à l'organe moteur d'exploitation sont définies par un monostable. Cette disposition permet d'éviter tout échauffement du dispositif, en limitant la durée des impulsions de commande appliquées à l'organe moteur.

D'autres caractéristiques, buts et avantages de la présente invention apparaîtront à la lecture de la description détaillée qui va suivre, et en regard des dessins annexés donnés à titre d'exemple non limitatif et sur lesquels :

- la figure 1 précédemment décrite illustre la structure d'un dispositif tachymétrique classique,
- la figure 2 représente schématiquement la structure d'un dispositif tachymétrique conforme à la présente invention, et
- la figure 3 illustre 4 signaux électriques explicitant le fonctionnement de ce dispositif.

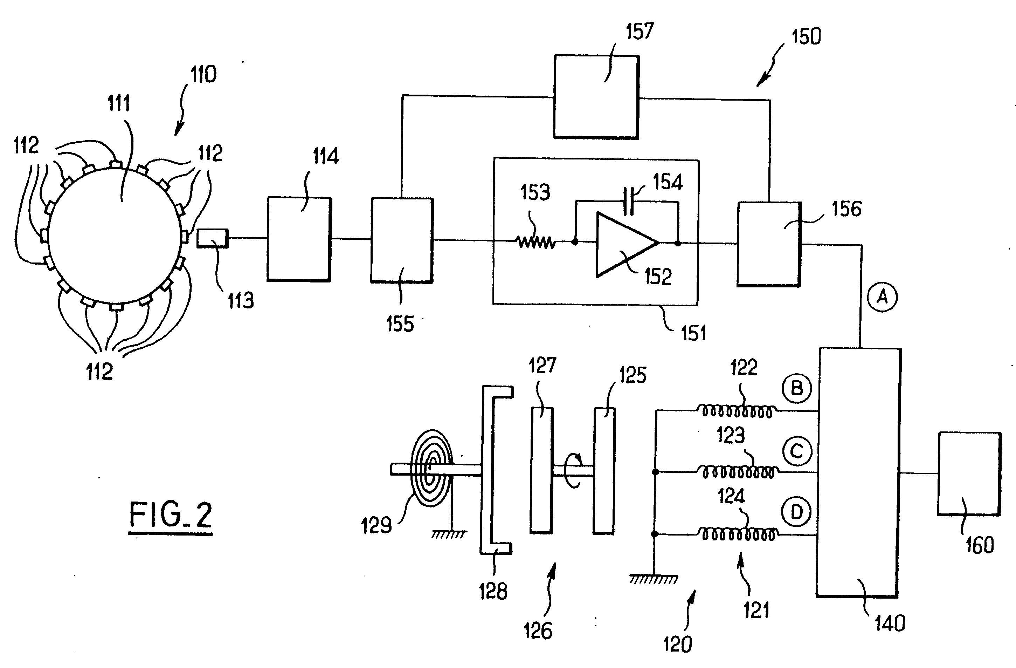

Le dispositif illustré sur la figure 2 annexée comprend un capteur 110, un organe moteur d'exploitation 120, des moyens de liaison électrique 130 et des moyens limiteurs de variation de fréquence 150.

Le capteur 110 est conçu pour générer un signal électrique de fréquence proportionnelle à une vitesse à détecter. Il peut être formé d'une roue phonique 111 pourvue de dents 112 équiréparties sur sa périphérie associée à un transducteur 113, tel qu'un transducteur à effet Hall, apte à générer des impulsions électriques au rythme du passage des dents 112.

Les impulsions issues du transducteur 113 sont appliquées par l'intermédiaire d'un étage de mise en forme 114 et des moyens de liaison électrique 130 aux moyens 150.

Ceux-ci comprennent en série selon le mode de réalisation illustré sur la figure 2 annexée, un convertisseur fréquence/tension 155, un intégrateur à grande constante de temps 151 et un convertisseur tension/fréquence 156.

L'intégrateur 151 est illustré schématiquement sous forme d'un amplificateur opérationnel 152 dont l'entrée est reliée à la sortie du convertisseur 155 par l'intermédiaire d'une résistance 153 et dont la sortie est reliée à l'entrée par l'intermédiaire d'un condensateur 154.

Un circuit 157 de compensation des dérives des deux condensateurs peut coupler ces derniers.

Les impulsions issues du convertisseur 156 sont appliquées à un circuit pilote 140 qui commande l'organe moteur d'exploitation 120.

Cet organe moteur 120 peut être formé, de façon connue en soi, comme indiqué précédemment en regard de la figure 1, d'un élément moteur pas à pas polyphasé 121 comprenant un stator à bobinages 122, 123, 124 et un rotor à aimant 125 et d'un système de mesure à courants de Foucault 126 comprenant un aimant auxiliaire 127 couplé à l'aimant 125, et une cloche 128 sollicitée par un ressort de rappel 129.

Le circuit pilote 140 comprend autant d'étages de sortie qu'il existe de bobinages 122, 123, 124 dans le stator de l'élément moteur 121. Chacun de ces étages de sortie attaque un bobinage respectif 122, 123 ou 124.

Le circuit pilote 140 est conçu pour appliquer successivement aux bobinages 122, 123, 124 des impulsions générées par un monostable 160 au rythme des impulsions issues du convertisseur 156.

On a illustré sur la figure 3 sous la référence A le signal issu du convertisseur 156, appliqué à l'entrée du circuit pilote 140, et sous les références B, C et D, les impulsions obtenues sur les étages de sortie du circuit pilote 140, générées par le monostable 160, appliquées successivement aux bobinages 122, 123, 124 au rythme des impulsions issues du convertisseur 156.

Ainsi, la durée des signaux de commande appliqués aux bobinages 122, 123, 124 est limitée et empêche tout échauffement excessif des bobinages, même en cas d'arrêt du dispositif.

En cas de pannes intermittentes du capteur 110 ou d'accélérations élevées de la roue 111, la tension de sortie de l'intégrateur évolue avec une constante de temps compatible avec la fréquence maximale de redémarrage du moteur.

## Revendications

1. Dispositif tachymétrique du type comprenant un capteur (110) générant un signal électrique de fréquence proportionnelle à une vitesse à détecter, un organe moteur d'exploitation (120) et des moyens de liaison électrique (130) reliant le capteur (110) à l'organe moteur d'exploitation (120), caractérisé par le fait qu'un dispositif (150) limitant les variations de fréquence des impulsions appliquées à l'organe moteur d'exploitation (120) est intercalé entre ce dernier et le capteur (110).

2. Dispositif tachymétrique selon la revendication 1, caractérisé par le fait que l'organe limiteur de variation de fréquence (150) comprend un étage intégrateur (151) précédé d'un étage convertisseur fréquence/tension (155) et suivi d'un étage convertisseur tension/fréquence (156).

3. Dispositif tachymétrique selon la revendication 2, caractérisé par le fait qu'un circuit de compensation des dérives des deux convertisseurs (155, 156) couple ces deux derniers.

4. Dispositif selon l'une des revendications 1 à 3, caractérisé par le fait que les impulsions de commande appliquées à l'organe moteur d'exploitation (120) sont définies par un monostable (160).

5. Dispositif tachymétrique selon l'une des revendications 1 à 4, caractérisé par le fait que l'organe moteur d'exploitation (120) comprend un élément moteur pas à pas polyphasé (121) comportant un stator à bobinages (122, 123, 124) et un rotor à aimant (125).

6. Dispositif tachymétrique selon la revendication 5 prise en combinaison avec la revendication 2, caractérisé par le fait qu'un circuit pilote (140) applique successivement aux bobinages (122, 123, 124) des impulsions générées par un monostable (160) au rythme des impulsions issues du convertisseur tension/fréquence (156).

7. Dispositif tachymétrique selon l'une des revendications 1 à 6, caractérisé par le fait que l'organe moteur d'exploitation (120) comprend, d'une part, un élément moteur pas à pas polyphasé (121) comportant un stator à bobinages (122, 123, 124) et un rotor à aimant (125) et, d'autre part, un circuit de mesure (126) comportant un aimant auxiliaire (127) couplé à l'aimant (125) de l'élément moteur (121) et une cloche (128) sollicitée par un ressort de rappel (129).

## Patentansprüche

1. Geschwindigkeitsmessvorrichtung der Bauart mit einem Aufnehmer (110), der ein elektrisches Signal einer Frequenz erzeugt, die proportional zu einer zu messenden Geschwindigkeit ist, einem Auswertemotor (120) und elektrischen Verbindungsmitteln (130), welche den Aufnehmer (110) mit dem Auswertemotor (120) verbinden, **dadurch gekennzeichnet**, daß eine Vorrichtung (150), welche Frequenzschwankungen der an den Auswertemotor (120) angelegten Impulse begrenzt, zwischen den letzteren und den Aufnehmer (110) geschaltet ist.

2. Geschwindigkeitsmessvorrichtung nach Anspruch 1, **dadurch gekennzeichnet**, daß die Frequenzbegrenzungsvorrichtung (150) eine Integrierstufe (151) aufweist, welche hinter einen Frequenz-/Spannungs-Wandler (155) und vor einen Spannungs-/Frequenz-Wandler (156) geschaltet ist.

3. Geschwindigkeitsmessvorrichtung nach Anspruch 2, **dadurch gekennzeichnet**, daß eine Kompensationsschaltung zum Kompensieren der Driften der beiden Wandler (155, 156) die beiden letzteren kuppelt.

4. Vorrichtung nach einem der Ansprüche 1 bis 3, **dadurch gekennzeichnet**, daß die an den Auswertmotor (120) angelegten Steuerimpulse durch eine monostabile Stufe (160) definiert sind.

5. Geschwindigkeitsmessvorrichtung nach einem der Ansprüche 1 bis 4, **dadurch gekennzeichnet**, daß der Auswertemotor (120) einen mehrphasigen Schrittmotor (121) mit einem Spulenwicklungen (122, 123, 124) aufweisenden Stator und einem Drehmagnet (125) aufweist.

6. Geschwindigkeitsmessvorrichtung nach Anspruch 5 in Verbindung mit Anspruch 2, **dadurch gekennzeichnet**, daß ein Pilot-Schaltkreis (140) die Spulenwicklungen (122, 123, 124) aufeinanderfolgend mit von eine monostabilen Stufe (160) erzeugten Impulsen im Rhythmus der aus dem Spannungs-/Frequenz-Wandler (156) abgegebenen Impulse beaufschlagt.

7. Geschwindigkeitsmessvorrichtung nach einem der Ansprüche 1 bis 6, **dadurch gekennzeichnet**, daß der Auswertemotor (120) einerseits einen mehrphasigen Schrittmotor (121) mit Spulenwicklungen (122, 123, 124) aufweisenden Stator und einem Drehmagnet (125) und andererseits einer Meßschaltung (126) aufweist, welche einen mit dem Magnet (125) des Schrittmotors (121) gekuppelten Hilfsmagnet (127) und eine durch eine Rückholfeder (129) beaufschlagte Glocke (128) aufweist.

## Claims

1. A tachometer device of the type comprising a sensor (110) generating an electrical signal at a frequency proportional to a speed to be detected, an operating drive member (120), and electrical link means (130) connecting the sensor (110) to the operating drive member (120), the device being characterized by the fact that a device (150) is interposed between the operating drive member (120) and the sensor (110) in order to limit variations in the frequency of the pulses applied to the operating drive member.

2. A tachometer device according to claim 1, characterized by the fact that the device for limiting frequency variation (150) comprises an integrator stage (151) preceded by a frequency-to-voltage converter stage (155) and followed by a voltage-to-frequency converter stage (156).

3. A tachometer device according to claim 2, characterized by the fact that the two converters (155, 156) are coupled together by a circuit for compensating drift therein.

4. A device according to any one of claims 1 to 3, characterized by the fact that the control pulses applied to the operating drive member (120) are defined by a monostable (160).

5. A tachometer device according to any one of claims 1 to 4, characterized by the fact that the operating drive member (120) includes a polyphase stepper motor element (121) including a stator having windings (122, 123, 124) and a rotor having a magnet (125).

6. A tachometer device according to claim 5 taken in combination with claim 2, characterized by the fact that a driver circuit (140) applies pulses generated by a monostable (160) to the windings (122, 123, 124) in succession and at the rate of the pulses delivered by the voltage-to-frequency converter (156).

7. A tachometer device according to any one of claims 1 to 6, characterized by the fact that the operating drive member (120) comprises firstly a polyphase stepper motor element (121) including a stator having windings (122, 123, 124) and a rotor having a magnet (125), and secondly a measuring circuit (126) comprising an auxiliary magnet (127) coupled to the magnet (125) of the motor element (121) and a bell (128) which is biased by a return spring (129).

## FIG_1

## FIG_3

FIG. 2

EP 0 334 693 B1